Europäisches Patentamt

European Patent Office

Office européen des brevets

(19)

(11) Numéro de publication: **0 213 607**
**B1**

(12) **FASCICULE DE BREVET EUROPEEN**

(45) Date de publication du fascicule du brevet: **16.05.90**

(51) Int. Cl.⁵: **H 04 Q 3/52, H 04 B 10/12, H 04 Q 11/02**

(21) Numéro de dépôt: **86111891.7**

(22) Date de dépôt: **28.08.86**

(54) Dispositif de telecommunication par fibres optiques.

(30) Priorité: **29.08.85 FR 8512902**

(43) Date de publication de la demande:
**11.03.87 Bulletin 87/11**

(45) Mention de la délivrance du brevet:
**16.05.90 Bulletin 90/20**

(84) Etats contractants désignés:
**AT BE CH DE FR GB IT LI LU NL SE**

(56) Documents cités:
**EP-A-0 077 292**
**US-A-3 573 379**
**US-A-3 864 521**

**NACHRICHTENTECHNISCHE ZEITSCHRIFT**
**N.T.Z., vol. 35, no. 11, novembre 1982, pages 686-689, Berlin, DE; C. BAACK et al.: "Zukünftige Lichtträgerfrequenztechnik in Glasfasernetzen"**

(73) Titulaire: **COMPAGNIE GENERALE D'ELECTRICITE Société anonyme dite:**
**54, rue La Boétie**
**F-75382 Paris Cédex 08 (FR)**

(72) Inventeur: **Robieux, Jean**
**5, rue du Professeur Roger Leroux**
**F-92290 Chatenay Malabry (FR)**

(74) Mandataire: **Weinmiller, Jürgen et al**
**Lennéstrasse 9 Postfach 24**
**D-8133 Feldafing (DE)**

## Description

La présente invention concerne un dispositif de télécommunication par fibres optiques, capable de mettre en communication entre eux N abonnés.

Ce dispositif est d'un type comportant

N postes affectés respectivement aux N abonnés, chaque poste comprenant

un circuit émetteur capable d'émettre des signaux électriques d'émission,

un génératur laser à semi-conducteur, capable de délivrer une onde optique d'émission,

un circuit de modulation branché entre le circuit émetteur et le générateur laser pour moduler en amplitude l'onde optique d'émission par des signaux électriques d'émission,

un système récepteur photoélectrique capable de délivrer des signaux électriques de réception lorsqu'il reçoit une onde optique de réception,

un circuit d'utilisation des signaux électriques de réception

et un circuit d'appel capable de former des signaux électriques d'appel des autres postes, ce circuit d'appel étant relié au circuit de modulation pour permettre la modulation en amplitude de l'onde optique d'émission par les signaux d'appel,

N couples de fibres optiques reliées respectivement aux postes des N abonnés, chaque couple comprenant une fibre optique d'émission dont une première extrémité est couplée optiquement à la sortie du générateur laser et une fibre optique de réception dont une première extrémité est couplée à l'entrée du système récepteur

et un volume d'interconnexion rempli par une matière dont l'indice de réfraction est voisin de celui du matériau formant le coeur des fibres optiques, les deuxièmes extrémités des fibres optiques d'émission et de réception étant raccordées à la surface délimitant ce volume.

Un dispositif de téléphonie de ce type est décrit dans le document FR—A—2 472 889.

Dans ce dispositif, des fréquences optiques $F_1 \ldots F_N$ ainsi que des fréquence de modulation $f_1 \ldots f_n$ sont affectées respectivement aux N abonnés, le générateur laser de l'abonné p délivre une onde lumineuse d'émission de fréquence $F_p$, cette onde lumineuse étant modulée par la fréquence de modulation $f_n$ affectées à un autre abonné n avec lequel l'abonné p désire entrer en communication.

Le système récepteur du poste de l'abonné p comporte:

N—1 filtres optiques ne laissant passer respectivement que les fréquences $F_1 \ldots F_{p-1}, F_{p+1} \ldots F_N$, disposés pour recevoir l'onde optique de réception transmise par la fibre optique de réception

N—1 détecteurs électro-optiques sélectifs recevant respectivement l'énergie sortant des N—1 filtres optiques, ces détecteurs ne délivrant un signal électrique que si l'amplitude de l'énergie lumineuse qu'ils reçoivent est modulée à la fréquence $F_n$,

des moyens recevant les signaux électriques délivrés par les détecteurs sélectifs et capables de signaler à l'abonné p l'ordre n du filtre de fréquence $F_n$ dont la rayonnement de sortie à provoqué l'émission d'un signal électrique du détecteur sélectif recevant ce rayonnement der sortie,

un conducteur optique dont une extrémité est disposée sur la face d'entrée d'un récepteur photoélectrique

et des moyens pour disposer l'autre extrémite du conducteur optique sur la sortie du filtre optique de fréquence $F_n$.

Ce dispositif de téléphonie optique présente l'inconvénient d'être difficiule à utiliser lorsque le nombre N d'abonnes est éléve. En effet il est nécessaire de prévoir dans ce cas un grand nombre de fréquences optiques différentes entre elles. De plus, le système récepteur de chaque abonné est encombrant et de réalisation délicate.

La présente invention a pour but de pallier cet inconvénient.

D'alleurs le document EP—A—0 077 292 décrit un système similaire uniquement fréquentiel à recepteur hétérodyne.

L'invention a pour objet un dispositif de télécommunications par fibre optique capable de mettre en communication entre eux N abonnés, du type mentionné précédemment, caractérisé en ce que

le générateur laser à semi-conducteur est du type à fréquence d'émission accordable et comporte un élément capable de faire varier la fréquence de l'onde optique d'émission par variation d'une courant électrique appliqué à cet élément, ce courant étant fourni par un circuit d'accord dont la sortie est connectée audit élément, ce courant réglant la fréquence de l'onde optique d'émission à une première fréquence porteuse $f_1$ lorsque le circuit d'accord ne reçoit aucun signal,

le dispositif comporte un central d'interconnexion comprenant ledit volume d'interconnexion, ce central comprenant en outre

un circuit de temporisation comprenant une horloge pour émettre des signaux périodiques de temporisation représentatifs de créneaux temporels différents affectés respectivement aux N postes

des moyens pour transmettre ces créneaux aux postes respectifs, chaque poste comprenant des moyens pour moduler en amplitude la fréquence $f_1$ de l'onde optique d'émission par les signaux d'appel, seulement à l'intérieur du créneau temporel affecté à chaque poste,

et un calculateur dont l'entrée est reliée au volume d'interconnexion pour recevoir les signaux d'appel modulant la fréquence $f_1$, ces signaux provenant des N postes, le calculateur désignant pour chaque communication demandée une fréquence optique $f_p$ disponible au moment de l'appel et choisie dans une suite prédéterminée de fréquences, deux fréquences successives étant séparées par un intervalle de fréquence constant, la sortie du calculateur étant reliée au volume d'interconnexion pour transmettre l'information de la fréquence $f_p$ désignée, cette

2

transmission s'effectuant sur une deuxième fréquence optique porteuse $f_2$ dans les créneaux affectés aux postes appelant et appelé

et le système récepteur de chaque poste comporte

un premier détecteur photoélectrique couplé optiquement avec la première extrémité de la fibre optique de réception pour recevoir les signaux de fréquence $f_2$ émis dans le créneau réservé au poste, ces signaux étant transmis audit circuit d'accord pour régler la fréquence d'émission du génératur laser à la fréquence désignée $f_p$

et un système de détection hétérodyne, comportant d'une part un deuxième détecteur photoélectrique couplé optiquement avec la première extrémité de la fibre optique de réception, et d'autre part un oscillateur local à semi-conducteur et à fréquence optique d'émission accordable, le poste comportant des moyens pour régler la fréquence de l'oscillateur local à une fréquence $f_q$ voisine de $f_p$, fq-fp étant faible par rapport audit intervalle de fréquences constant entre deux fréquences successives de la liste prédéterminée, l'one optique émise par l'oscilateur local illuminant la surface de réception du deuxième détecteur, la sorte du système de détection hétérodyne étant reliée au circuit d'utilisation.

Dans un mode de réalisation du dispositif selon l'invention, les moyens pour moduler en amplitude la fréquence $f_1$ de l'onde optique d'émission par les signaux d'appel, seulement à l'intérieur du créneau temporel affecté au poste, comprennent

une mémoire connectée entre le circuit d'appel et le circuit de modulation, pour stocker les signaux d'appel

et un circuit de commande relié à la mémoire pour faire passer dans le circuit de modulation les signaux d'appel stockés, seulement à l'intérieur du créneau temporel affecté au poste.

Dans ce cas, le circuit de temporisation peut comporter, pour chaque poste, un circuit de formation de créneau connecté à la sortie de l'horloge, et les moyens pour transmettre ces créneaux à chaque poste peuvent comporter un émetteur d'un faisceau laser ayant une troisième fréquence optique porteuse $f_3$, une fibre optique reliant la sortie de cet émetteur à un récepteur photoélectrique disposé dans le poste, la sortie électrique de ce recépteur étant reliée à l'entrée du circuit de commande de la mémoire.

Dans un autre mode de réalisation du dispositif selon l'invention, le volume d'interconnexion est relié à l'entrée du calculateur par une branche comportant successivement en série une fibre optique, un filtre optique passe-bande de fréquence $f_1$, un récepteur photoélectrique et un circuit sélecteur relié aux circuits de formation de créneaux pour séparer à l'entrée du calculateur les signaux émis dans les différents créneaux temporels.

Dans un autre mode de réalisation du dispositif selon l'invention, la sortie du calculateur est reliée au volume d'interconnexion par une branche comportant successivement en série une mémoire et un émetteur d'un faisceau laser de fréquence $f_2$, dont la sortie est reliée audit volume par une fibre optique, cette mémoire étant connectée à un circuit de commande relié aux circuits der formation de créneaux affectés aux N postes.

Dans un autre mode de réalisation du dispositif selon l'invention, il comporte en outre, pour chaque poste, un filtre passe-bande de fréquence $f_1$ disposé entre le premier détecteur photoélectrique et la première extrémité de la fibre optique de réception et un circuit de sélection branché entre la sorte du premier détecteur et l'entrée du circuit d'accord afin de régler la fréquence d'émission du générateur laser à la fréquence désignée $f_p$, ce circuit de sélection ne laissant passer les signaux de réception que dans le créneau réservé au poste.

Dans un autre mode de réalisation du dispositif selon l'invention, pour chaque poste, l'élément d'accord de l'oscillateur local est connecté à une sortie du circuit d'accord, et les système de détection hétérodyne comporte un circuit démodulateur branché entre la sortie du deuxième détecteur et l'entrée du circuit d'utilisation.

Dans ce cas, chaque poste peut comporter un circuit d'alarme relié au circuit de sélection disposé dans ce poste.

Une forme d'exécution de l'objet de la présente invention est décrite ci-dessous, à titre d'exemple, en regard des dessins annexés dans lesquels

la figure 1 représente schématiquement un mode de réalisation du dispositif selon l'invention

et la figure 2 est un diagramme illustrant les créneaux temporels affectés aux différents postes.

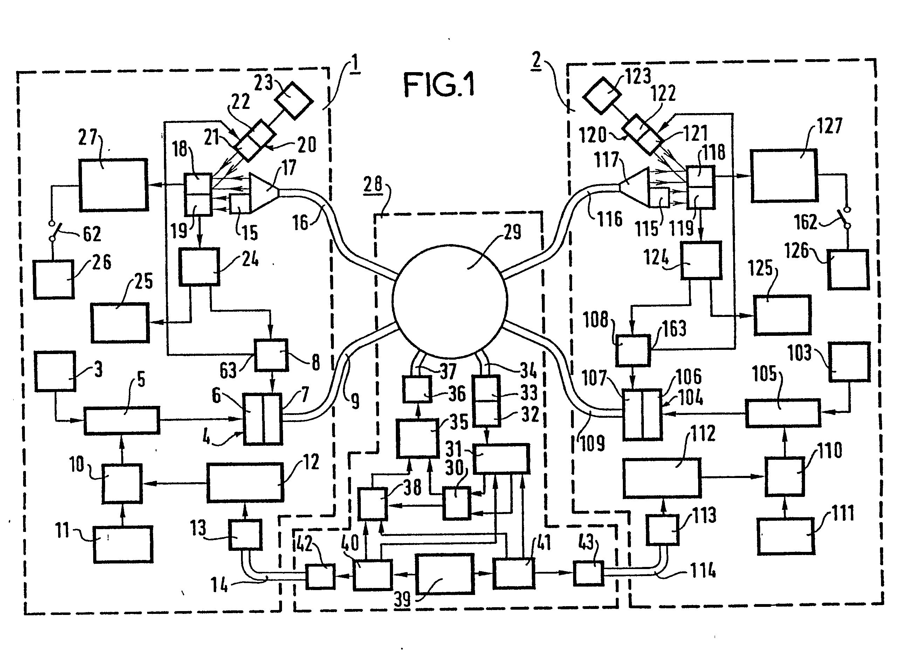

Sur la figure 1, est représenté un dispositif de télécommunication optique permettant de mettre en communication entre eux N abonnés, N pouvant être de l'ordre de 100.000, ces abonnés étant par exemple ceux d'un département français. Caque abonné possède un poste émetteur-récepteur; pour simplifier la figure seuls deux postes 1 et 2 ont été représentés.

Le poste 1 comporte un circuit émetteur 3 capable d'émettre des signaux électriques d'emission qui peuvent être des signaux téléphoniques ou vidéo. Le circuit 3 est relié à l'entrée électrique d'un générateur laser 4 à semi-conducteur à travers un circuit de modulation 5.

Le générateur laser 4 est à fréquence de rayonnement accordable, du type de celui décrit dans l'article 'High speed direct single-frequency modulation with large tuning rate and frequency excursion in cleaved-coupled-cavity semiconductor lasers'' (W. T. Tsang et al) extrait de la revue des Etats Unis d'Amérique ''Applied Physics Letters'' volume 42, n° 8, 15 avril 1983, pages 650 à 652. Le générateur laser 4 comprend une diode émettrice 6 et un élément 7, couplés optiquement, l'élément 7 étant capable de faire varier la fréquence de l'onde optique émise par la diode 6. Cette variation de fréquence est obtenues en faisant varier un courant électrique appliqué à l'élément 7. Un circuit d'accord 8 est relié à l'élément 7 du générateur laser 4. La sortie du générateur laser 4 est couplée optiquement avec une extrémité d'une fibre optique d'émission 9.

Le circuit modulateur 5 est relié à travers une mémoire 10 à un circuit d'appel 11. Un circuit de commande 12 est relié d'une part à la mémoire 10 et à la sorte électrique d'un récepteur photoélectrique 13 dont l'entrée optique est couplée avec une extrémité d'une autre fibre optique 14.

Le poste 1 comporte en outre un système récepteur photoélectrique qui comporte un filtre optique 15 disposé pour recevoir une partie du rayonnement optique sortant d'une extrémité d'une fibre optique de réception 16 à travers un organe de couplage optique 17. L'autre partie de ce rayonnement illumine la surface de réception d'un récepteur photoélectrique 18. Le rayonnement ayant traversé le filtre 15 arrive sur la surface de réception d'un autre récepteur photoélectrique 19. Un oscillateur local 20, constitué par un générateur laser à semi-conducteur à fréquence d'émission accordable, d'un type analogue à celui du générateur laser 4, est disposé pour que son rayonnement de sortie illumine la surface de réception du récepteur 18. L'élément d'accord 21 de l'oscillateur 20 est connecté électriquement à la sortie 63 du circuit d'accord 8, tandis que la diode émettrice 22 de l'oscillateur 20 est connectée à un circuit d'alimentation 23. La sortie électrique du récepteur 19 est connectée à l'entrée d'un circuit sélecteur 24 dont la sortie est reliée d'une part un circuit d'accord 8 et d'autre part à un circuit d'alarme 25 qui peut être constitué par une sonnerie électrique.

La sorte électrique du récepteur 18 est connectée à un circuit d'utilisation 26 à travers un circuit démodulateur 27 et un interrupteur 62. Dans le cas où le dispositif selon l'invention est appliqué à un dispositif de téléphonie par exemple, le circuit émetteur 3 peut être le microphone d'un combiné et le circuit d'utilisation 26 peut être l'écouteur de ce combiné.

Le poste 2 est absolument identique au poste 1 et les éléments du poste 2 correspondant aux éléments 3 à 27, 62 et 63 du poste 1 ont été désignés repectivement par les références 103 à 127, 162 et 163.

Le dispositif représenté sur la figure 1 comporte un central d'interconnexion 28. Ce central comprend un volume d'interconnexion 29. Ce volume peut être par exemple une sphère comme représenté. Il peut être formé par une enveloppe contenant des éléments diffusants, remplie par une matière ayant un indice de réfraction proche du celui du coeur des fibres optiques. Cette matière peut être par exemple de l'air. Les extrémités libres des fibres optiques d'émission et de réception telles que 9 ou 16 appartenant aux différents postes d'abonnés sont raccordées, par exemple par soudure, sur l'enveloppe délimitant le volume 29.

Le central d'interconnexion 28 comporte en outre un calculateur 30 comportant N entrées reliées respectivement aux N sorties d'un circuit sélecteur 31. L'entrée du circuit 31 est connectée à la sortie électrique d'un récepteur photoélectrique 32 dont l'entrée optique est couplée à un filtre optique 33 lui-même raccordé au volume 29 par un tronçon de fibre optique 34. La sortie du calculateur 30 est reliée à l'entrée d'une mémoire 35 dont la sorte est connectée à l'entrée électrique d'un générateur laser à semi-conducteur 36. La sortie optique du générateur laser 36 est raccordée au volume 29 par un tronçon de fibre optique 37. Un circuit de commande 38 est connecté à la mémoire 35 et à la sortie du calculateur 30.

Le central d'interconnexion 28 comporte de plus un horloge 39 et N circuits de formation de créneaux temporels tels que 40 et 41 connectés à la sortie de cette horloge. Les N sorties du circuit sélecteur 31 sont reliées respectivement aux N circuits de formation de créneaux. Le circuit de commande 38 comporte N entrées reliées respectivement aux N circuits de formation de créneaux. La sortie du circuit 40 est reliée à l'entrée électrique d'un émetteur laser à semi-conducteur 42 dont la sortie optique est couplée à l'extrémité libre de la fibre optique 14. De même, la sortie du circuit 41 est reliée à l'entrée électrique d'un émetteur laser à semi-conducteur 43 dont la sortie optique est couplée à l'extrémité libre de la fibre optique 114.

Le dispositif représenté sur la figure 1 fonctionne de la manière suivante.

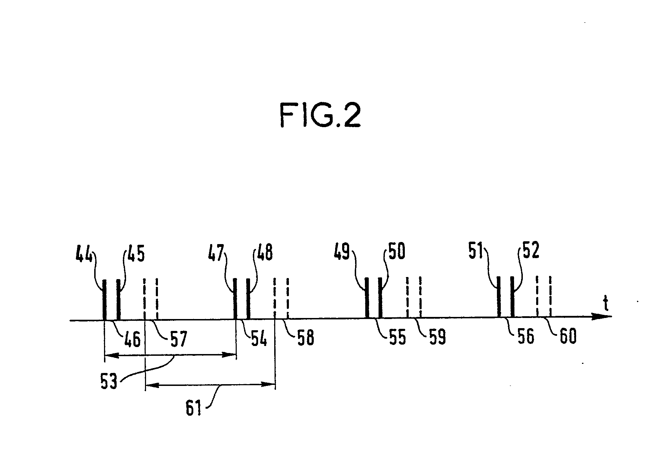

Les circuits tels que 40 et 41 forment pour les N postes des créneaux temporels périodiques. A chaque poste est affecté une suite de créneaux, distincte de celle des créneaux affectés aux autres postes. La figure 2 représente un diagramme, en fonction du temps t, sur lequel sont représentés un groupe de deux impulsions successives 44 et 45 délimitant un créneau temporel 46 constitué par l'intervalle de temps entre les impulsions 44 et 45. Ces impulsions sont émises par le circuit 40 à partir des impulsions de l'horloge 39. Le circuit 40 délivre en outre des groupes de deux impulsions 47—48, 49—50, 51—52 . . . analogues au groupes 44—45, à des intervalles de temps égaux 53, de manière à former, avec le créneau 46, une suite périodique de créneau temporels 54, 55, 56 affectés au poste 1.

De même, le circuit 41 délivre des groupes d'impulsions, représentées en traits interrompus sur la figure 2 et délimitant une suite de créneau temporels 57, 58, 59, 60 séparés entre eux par un intervalle de temps 61 égal à l'intervalle 53. Cette suite de créneau est affectée au poste 2.

Bien entendu, les suites de créneaux affectées aux différents postes sont décalées les unes par rapport aux autres de manière à être distinctes les unes des autres. A titre indicatif, chaque créneau temporel a une durée de quelques microsecondes alors que les intervalles de temps 53 ou 61 sont égaux à 1 seconde.

Les créneaux temporels sont transmis par une fibre optique au poste auquel ils sont affectés.

C'est ainsi que les créneaux affectés au poste 1 et délivrés par le circuit 40 modulent l'amplitude d'une onde optique de fréquence $f_3$, émise par l'émetteur laser à semi-conducteur 42, cette onde optique étant transmise par la fibre optique 14 au récepteur photoélectrique 13 disposé dans le poste 1. La fréquence $f_3$ est réservée uniquement à la transmission des créneaux aux différents postes: les créneaux affectés au poste 2 modulent la fréquence optique $f_3$ de l'onde optique émise par l'émetteur laser à semi-conducteur 43 et transmise par la fibre optique 114 vers la récepteur photoélectrique 113 disposé dans le poste 2.

A chaque poste est affecté un numéro d'appel. Lorsque le titulaire du poste 1 désire entrer en communication avec celui du poste 2, il introduit le numéro d'appel du poste 2 dans le circuit d'appel 11. Ce circuit d'appel peut être par exemple du type bien connu à cadran tournant utilisé dans les installations téléphoniques. Les impulsions électriques caractéristiques du numéro d'appel du poste 2, émises par le circuit 11, sont stockées dans la mémoire 10. Le circuit de commande 12 permet le transfert de ces impulsions d'appel, de la mémoire 10 vers le circuit de modulation 5, uniquement dans les créneaux temporels de la suite de créneaux affectée au poste 1, l'information de ces créneaux étant délivrée à l'entrée du circuit 12 par la sortie électrique du récepteur photoélectrique 13. Grâce au circuit 5, l'onde optique émise par le générateur laser 4 est modulée en amplitude par les signaux d'appel. Lorsque le circuit d'accord 8 ne reçoit aucun signal sur son entrée, la fréquence de l'onde optique émise par le générateur laser 4 est égale à une fréquence $f_1$ réservée aux appels émanant des différents postes.

Les signaux d'appel du poste 2 modulant la fréquence $f_1$ de l'onde émise par la générateur 4, dans la suite de créneaux temporels affectée au poste 1, sont donc reçus dans le volume 29 qui reçoit aussi, en même temps, d'autres signaux d'appels émanant d'autres postes, ces signaux modulant tous la même fréquence $f_1$ mais étant émis dans des créneaux temporels différents.

Tous ces signaux d'appel sont transmis par la fibre 34 et traversent le filtre optique 33, qui un filtre passe-bande de fréquence $f_1$, pour être reçus sur la surface de réception du récepteur photoélectrique 32. Les signaux délivrés par la sortie électrique du récepteur 32 sont reçus à l'entrée du circuit sélecteur 31. Celui-ci dirige sur ses N sorties les signaux émis respectivement dans les N suites de créneaux affectées aux N postes. Le calculateur 30 traite les appels simultanés dans un ordre prédéterminé et désigne pour chaque appel une fréquence optique porteuse différente. Les fréquences optiques sont par exemple rangées suivant une liste prédéterminée $f_1 \ldots f_M$ et la calculateur 31, qui est informé de toutes les communications en cours, désigne la fréquence disponible de rang minimum. Dès qu'il reçoit les signaux d'appel du poste 1 pour entrer en communication avec le poste 2, il désigne par exemple la fréquence porteuse optique $f_p$.

Si le nombre d'abonnés est N = 100.000, le nombre maximum des communications simultanées peut être estimé à environ M = 10.000. A titre indicatif, on peut admettre un intervalle constant de $10^8$ Hertz entre deux fréquences successives de la liste prédéterminée.

Des signaux électriques représentatifs de la fréquence $f_p$ désignée pour la communication entre les postes 1 et 2 sont délivrés à la sorte du calculateur 30 pour être stockés dans la mémoire 35. Le circuit de commande 38, relié aux différents circuits formateurs de créneaux 40 et 41, est informé par le calculateur 30 qu'une communication doit être établies entre le poste 1 et le poste 2; il autorise le passage des signaux stockés dans la mémoire 35, uniquement dans les suites de créneaux affectés aux postes appelant et appelé, de la mémoire 35 à un émetteur laser à semi-conducteur 36 émettant une onde optique de frequence fixe $f_2$. Cette onde optique modulée par ces signaux est transmise à travers la fibre 37 au volume d'interconnexion 29.

Les ondes optiques de fréquence $f_2$ présentes dans le volume 29 sont transmises par la fibre optique de réception 116 du poste 2 et transversant le filtre optique 115 qui est du type passe-bande de fréquence $f_2$. Le récepteur 119 délivre à sa sorte les signaux électriques de modulation de ces ondes et le circuit de sélection 124 ne retient parmi ces signaux que ceux situés dans la suite de créneaux réservée au poste 2. Le circuit d'alarme 125 est mis alors en fonctionnement, ce qui avertit le titulaire du poste 2 que le titulaire d'un autre poste désire entrer en communication avec lui.

Le circuit d'accord 108 reçoit sur son entrée des signaux représentatifs de la fréquence $f_p$ désignée pour cette communication. Les circuit 108 comporte des moyens pour appliquer à l'élément 107 du générateur laser 104 un courant électrique capable de régler la fréquence de l'onde optique émise par ce générateur 104 à la fréquence $f_p$ désignée.

Le titulaire du poste 2 peut alors provoquer l'émission par le circuit 103 de signaux représentatifs d'un message à transmettre au titulaire du poste 1. Grâce au circuit de modulation 105, les signaux du message modulent l'onde optique de fréquence $f_p$ émise par la générateur laser 104. Les signaux optiques émis par le générateur 104 sont transmis par la fibre 109 au volume d'interconnexion 29.

Mais les ondes optiques de fréquence $f_2$ présentes dans le volume 29 sont également transmises par la fibre optique 16 et traversent le filtre optique 15 qui est aussi filtre passe-bande de fréquence $f_2$. Le récepteur 19 délivre à sa sortie les signaux électriques de modulation des ces ondes le circuit de sélection 24 ne retient parmi ces signaux que ceux situés dans la suite de créneaux réservée au poste 1. Ces derniers signaux sont transmis aui circuit d'accord 8 qui applique à l'élemént 7 du générateur laser 4 un courant permettant le réglage automatique de la fréquence d'émission de ce générateur laser à la

fréquence designée $f_p$. Le titulaire du poste 1 peut donc provoquer l'émission par le circuit 3 de signaux électriques correspondant à un message à transmettre au titulaire du poste 2. Ce message est transmis, après modulation par le circuit 5 de l'onde optique émise par le générateur laser 4, sous forme de signaux modulant l'onde optique de fréquence $f_p$ émise par le générateur laser 4 et transmis par la fibre 9 vers le volume d'interconnexion 29.

Le circuit d'accord 8 comporte des moyens pour délivrer, sur sa sortie 63 reliée à l'élément 21 de l'oscillateur local 20, des signaux capables de régler la fréquence d'émission de cet oscillateur à une fréquence $f_q$ très proche de $f_p$. La différence $f_q - f_p$ doit être faible par rapport à l'intervalle entre deux fréquences successives de la liste prédéterminée de fréquences porteuses. Le récepteur 18 fonctionne alors comme un système de réception hétérodyne et délivre à sa sortie une onde électrique de fréquence $f_q - f_p$. Cette onde est modulée par les signaux, émis par le circuit 103, qui modulent l'onde de fréquence $f_p$, émise par le générateur laser 104, arrivant dans le volume 29. Ce système de réception hétérodyne permet d'eliminer les autres ondes optiques, passant dans le volume 29, dont les fréquences porteuses, différentes de $f_p$, sont désignées par le calculateur 30 pour d'autres communications établies en même temps que la communication entre les postes 1 et 2.

L'onde électrique de fréquence $f_q - f_p$ délivrée par le recepteur 18 est démodulée par le circuit démodulateur 27, et le circuit d'utilisation 26 reçoit donc les signaux électriques émis par le circuit 103 par le titulaire du postes 2 et destinés à celui du poste 1.

De même les signaux délivrés à la sortie 163 du circuit d'accord 109 sont transmis à l'élément 121 de l'oscillateur local 120, de façon à régler sa fréquence d'émission à la valeur $f_q$. Le récepteur 118 fonctionne alors comme un système de réception hétérodyne et délivre à sa sortie une onde électrique de fréquence $f_q - f_p$ démodulée par le circuit 127. Le circuit d'utilisation 126 du poste 2 reçoit donc le message du poste 1 émis par le circuit 3.

La communication est donc établie, dans les deux sens entre les postes 1 et 2.

De moyens d'atténuation ou de coupure des signaux de réception, agissant pendant le fonctionnement du circuit d'émission, peuvent être prévus dans le circuit de réception de chaque poste, pour éviter que le message émis par un poste ne soit reçu sur le circuit d'utilisation de ce même poste. Ces moyens sont représentés schématiquement par les interrupteurs 62 et 162.

Le dispositif de télécommunication selon l'invention présente l'avantage de n'utiliser qu'un nombre minimal de fréquences porteuses $(f_p)$, ce nombre étant égal au nombre maximal de communications susceptibles d'être établies simultanément entre les N postes de l'installation. Ce nombre est nettement inférieur à N. Le nombre de fréquences $(f_1, f_2, f_3)$ réservées à la transmission de signaux annexes est très faible.

Du plus, le système récepteur de chaque poste est simplifié par l'utilisation d'un système hétérodyne qui permet un filtrage efficace des fréquences porteuses des ondes présentes simultanément dans le volume d'interconnexion. Le réalisation des postes est également simplifiée par l'utilisation de lasers à semiconducteur à fréquence à fréquence d'émission accordable.

Les émetteurs laser à semi-conducteur à fréquence d'émission fixe (tels que 36, 42 et 43) peuvent être des générateurs laser à fréquence d'émission ajustable en cours de fabrication, du type décrit dans l'article "Room temperature CW operation of distributed-feedback buried-hetero structure In Ga As P/$I_n$ P lasers emitting at 1.57 micron" (K. UTAKA et al), extrait de la revue des Etats Unis d'Amerique "Electronics Letters", 10 decembre 1981, vol. 17 n° 25, pages 961 à 963.

Le dispositif selon l'invention peut être appliqué à la réalisation d'un réseau de télécommunication groupant 100.000 abonnés autour d'un poste central d'interconnexion.

## Revendications

1. Dispositif de télécommunication par fibres optiques, capable de mettre en communication entre eux deux quelconques parmi N abonnés, comportant

N postes (1, 2) affectés respectivement aux N abonnés, chaque poste comprenant

un générateur laser (4) capable d'émettre une onde optique modulée par des signaux porteurs de messages,

un récepteur photoélectrique (18) du type hétérodyne, capable de recevoir une onde optique provenant d'un autre abonné et modulée par des signaux porteurs de messages,

un central d'interconnexion (28) comprenant un volume d'interconnexion (29) et un calculateur (30) attribuant des canaux de fréquence libres $(f_p)$ aux abonnés appellants et appelés,

et deux fibres optiques (9, 16; 109, 116) par poste, l'une reliant le générateur laser (4) du poste audit volume (29) et l'autre reliant ledit volume (29) au récepteur photoélectrique (18) du poste, caractérisé en ce que

le générateur laser (4) de chaque poste, de type semiconducteur à frequence optique accordable, est commandé par un courant électrique fourni par un circuit d'accord (8), et émet à une première fréquence optique $(f_1)$ lorsque ledit circuit d'accord (8) ne reçoit aucun signal,

une troisième fibre (14) par poste est prévue entre ledit poste et le central d'interconnexion, transmettant audit poste des signaux périodiques de temporisation représentatifs de créneaux temporels différents affectés respectivement aux N postes, et permettant ainsi auxdits postes de moduler en amplitude la pre-

mière fréquence (f₁) de l'onde optique dudit générateur (4) seulement à l'intérieur du créneau temporel affecté audit poste, ladite modulation contenant des informations d'appel,

chaque poste (1, 2) comporte en outre un système récepteur photoélectrique (19, 119) sensible à une seconde fréquence optique ($f_2$) et contrôlant une sonnerie en phase d'établissement d'une communication et puis transmettant au dit circuit d'accord (8), une information concernant la fréquence d'emission de laser (4) seulement à l'intérieur du créneau temporel affecté audit poste,

le central d'interconnexion (28) comporte un générateur laser (36) qui est capable d'émettre une onde optique vers ledit volume (29) à ladite seconde fréquence ($f_2$) et qui est contrôlé par lesdits signaux périodiques de temporisation, de sorte qu'il ne module cette onde par des signaux électriques que pendant les créneaux représentation de la fréquence ($f_p$) temporels affectés aux postes appellants et appelés, la fréquence ($f_p$) étant attribuée par le calculateur,

et le central d'interconnexion (28) comporte en outre un système de réception (32, 33) relié audit volume (29) et sensible à ladite première fréquence optique ($f_1$) pour recevoir les informations d'appel.

2. Dispositif selon la revendication 1, caractérisé en ce que le récepteur (18) du type hétérodyne reçoit, outre l'onde optique provenant d'un autre abonné, une onde optique qui est engendrée par un oscillateur local (20, 120) à fréquence optique accordable, cet oscillateur local étant accordé par ledit circuit d'accord (8) à une fréquence ($f_q$) très proche de ladite fréquence de modulation ($f_p$).

3. Dispositif selon l'une des revendications précédentes, caractérisé en ce que chaque poste comporte en outre des moyens (62, 162) d'atténuation des signaux de réception agissant pendant le fonctionnement du poste en émission.

## Patentansprüche

1. Lichtleitfaser-Fernmeldevorrichtung, die zwei beliebige von N Teilnehmer miteinander verbinden kann, mit

N Apparaten (1, 2), die den N Teilnehmern zugeordnet sind, wobei jeder Apparat enthält

einen Lasergenerator (4), der eine optische Sendewelle aussenden kann, due von Nachrichten tragenden Signalen moduliert wird,

einen photoelektrischen Enpfänger (18) vom Heterodyn-Typ, der eine optische Welle empfangen kann, die von einem anderen Teilnehmer kommt und von Nachrichten tragenden Signalen moduliert wird,

einer Schaltzentrale (28) mit einem Verbindungsvolumen (29) und einem Rechner (30), der den rufenden und gerufenen Teilnehmern freie Frequenzkanäle ($f_p$) zuteilt,

und zwei Lichtleitfasern (9, 16; 109, 116) pro Apparat, von denen die eine den Lasergenerator des Apparats mit dem Volumen verbindet und die andere das Volumen (29) mit dem photoelektrischen Empfänger (18) des Apparats verbindet, dadurch gekennzeichnet, daß

der Lasergenerator (4) jedes Apparats vom Halbleiter-Typ mit abstimmbarer Frequenz ist und durch einen von einem Abstimmkreis (8) gelieferten elektrischen Strom gesteuert wird und mit einer ersten optischen Frequenz ($f_1$) sendet, wenn der Abstimmkreis (8) kein Signal erhält,

eine dritte Faser (14) pro Apparat zwischen dem Apparat und der Schaltzentrale vorgesehen ist, die auf den Apparat periodische Verzögerungssignale überträgt, die repräsentativ für verschiedene Zeitkanäle sind, die den einzelnen N Apparaten zugeteilt sind, und so den Apparaten die Amplitudenmodulation der ersten Frequenz ($f_1$) der optischen Welle des Generators (4) nur innerhalb des diesem Apparat zugeteilten Zeitkanals erlaubt, wobei die Modulation Rufinformationen enthält,

jeder Apparat (1, 2) weiter ein photoelektrisches Empfangssystem (19, 119) aufweist, das auf eine zweite Frequenz ($f_2$) anspricht und ein Klingelzeichen in der Phase des Aufbaus einer Verbindung steuert und dann auf den Abstimmkreis (8) eine Information betreffend die Sendefrequenz des Lasers (4) nur innerhalb des dem Apparat zugeteilten Zeitkanals überträgt,

die Verbindungszentrale (28) einen Lasergenerator (36) aufweist, der eine optische Welle zum Volumen (29) mit der zweiten Frequenz ($f_2$) senden kann und der den periodischen Verzögerungssignalen gesteuert wird, so daß er diese Welle nut während der den rufenden und gerufenen Apparaten zugeteilten Zeitkanälen mit für die Frequenz ($f_p$) repräsentativen Signalen moduliert, wobei die Frequenz ($f_p$) durch den Rechner zugeteilt wird,

und die Verbindungszentrale (28) weiter ein Empfangssystem (32, 33) aufweist, das mit dem Volumen (39) verbunden ist und auf die erste optische Frequenz ($f_1$) anspricht, um die Rufinformationnen zu empfangen.

2. Vorrichtung nach Anspruch 1, dsdurch gekennzeichnet, daß der Empfänger (18) vom Heterodyn-Typ außer der von einem anderen Teilnehmer kommenden optischen Welle eine optische Welle enpfängt, die von einem lokalen Oszillator (20, 120) mit abstimmbarer optischer Frequenz erzeugt wird, wobei dieser Lokaloszillator von dem Abstrimmkreis (8) auf eine Frequenz ($f_q$) sehr nahe der Mudulationsfrequenz ($f_p$) abgestimmt wird.

3. Vorrichtung nach einem dr vorhergehenden Ansprüche, dadurch gekennzeichnet, daß jeder Apparat außerdem Mittel (62, 162) zur Dämpfung der Empfangssignale aufweist, die während des Sendebetriebs des Apparats wirken.

## Claims

1. An optical fiber telecommunication device adapted to provide communications between any ones out of N users, comprising

N stations (1, 2) assigned respectively to the N users, each station comprising

a laser (4) adapted to deliver an optical wave modulated by signals which bear messages,

a photo-electric receiver (18) of the heterodyne type adapted to receive an optical wave from another user and modulated by message bearing signals,

an interconnection central station (28) comprising an interconnecting volume (29) and a processor (30) assigning channels of free frequencies ($f_p$) to the calling and called users,

and two optical fibers (9, 16; 109, 116) per user, one connecting the laser (4) of the station to said volume (29) and the other connecting said volume (29) to the photoelectric receiver (18) of the station, characterized in that

the laser (4) of each station is of the tunable emission frequency type and is controlled by an electric current delivered by a tuning circuit (8), the laser emitting at a first optical frequency ($f_1$) when said tuning circuit (8) does not receive any signal,

a third fiber (14) for each station is provided between said station and the interconnection central station, transmitting to said station periodic timing signals representing different time slots assigned respectively to the N stations and thus allowing these stations to amplitude-modulate the first frequency ($f_1$) of the optical wave of said laser (4) only inside the time slot assigned to said station, said modulation containing the ringing informations,

each station (1, 2) further comprises a photo-electric receiver system (19, 119) sensitive to a second optical frequency ($f_2$) and controlling a bell during the phase of setting up a communication, and then transmitting to said tuning circuit (8) an information concerning the laser emission frequency only inside the time slot assigned to said station,

the interconnection central station (28) comprises a laser (36) which is adapted to emit an optical wave towards said volume (29) at said secondary frequency ($f_2$) and which is controlled by said periodic timing signals in such a way that this wave is modulated by electrical signals signifying said frequency ($f_p$) only during the time slots assigned to the calling and called stations, the frequency ($f_p$) being assigned by the processor,

and the interconnecting central office (28) further comprises a reception system (32, 33) connected to said volume (29) and sensitive to the first optical frequency ($f_1$) in order to receive the ringing informations.

2. A device according to claim 1, characterized in that the receiver (18) of the heterodyne type receives, besides the optical wave coming from another station, an optical wave which is produced by a local oscillator (20, 120) at a tunable optical frequency, the local oscillator being tuned by said tuning circuit (8) to a frequency ($f_q$) which is very close to said modulation frequency ($f_p$).

3. A device according to one of the preceding claims, characterized in that each station further comprises means (62, 162) for attenuating the received signals, these means acting while the station is in the transmission mode.

FIG.1

EP 0 213 607 B1

# FIG.2